# EUROPEAN PATENT APPLICATION

(11) **EP 2 096 376 A2**
(43) Date of publication of application: **02.09.2009**
(21) Application number: 09380020.9
(22) Date of filing: 06.02.2009
(51) Int. Cl.: F24J 2/26

(54) **Extruded metal absorber for solar collector**

(30) Priority: 07.02.2008 ES 200800251; 05.02.2009 ES 200900193
(71) Applicant: Fundación Cidaut, 47151 Boecillo (ES)
(72) Inventor: Merino Senovilla, Juan Carlos Parque Tecnologico de Boecillo, 47151 Boecillo Valladolid (ES); Alonso Sastre, Carlos Parque Tecnologico de Boecillo, 47151 Boecillo Valladolid (ES); Zamarron Pinilla, Alberto Parque Tecnologico de Boecillo, 47151 Boecillo, Valladolid (ES); De La Fuente Arevalo, Miguel Angel Parque Tecnologico de Boecillo, 47151 Boecillo, Valladolid (ES); Maturana Montero, Francisco Javier Parque Tecnologico de Boecillo, 47151 Boecillo, Valladolid (ES)
(74) Representative: Vicario Cubillo, Marcos

(57) **Abstract**

Especially conceived to permit capturing solar radiation for the subsequent thermal interchange with a heat-transfer fluid that runs through the interior thereof, the absorber of the invention is comprised by extruded elements of aluminium or aluminium alloy (1), that form a channel (1b) for the circulation of the heat-transfer fluid, whose profile is directed towards both sides in the fins (1a) that together with the surrounding area of the channel established in the extruded profile are fastened by welding to two end and crosswise tubes (2) as collector elements; with the special feature that the free edges of the lateral fins of the adjoining extruded profiles plates (3) are welded, determining a surface continuity of the overall absorber, or else a common metallic sheet (4), which can have a selective coating.

## Description

### FIELD OF THE INVENTION

This invention refers to an absorber for a thermal solar collector, whose obvious purpose is to absorb solar radiation and to perform thermal interchange with a heat-transfer fluid that flows through its interior, being able to use the fluid for obtaining hot water or for any other use in other types of interchanges or energy transformations.

The object of the invention is to attain an absorber with a high energy yield, based on a simple structure and with a maximum surface for the impact of the solar radiation.

### BACKGROUND OF THE INVENTION

As it is already known, the absorbers used in thermal solar collectors are produced, generally, in two different ways, so that in the first case the absorbing element is based on the union by welding or by simple contact of a flat metallic sheet with a series of copper pipes welded in the form of a grid.

This first type of absorbing elements has the inconvenience of the surface in contact with the absorbing sheet and the channels being very small, which makes the thermal interchange, and therefore the efficiency, very difficult.

Also taking into account that copper is normally used and this is a high-density metal, it negatively impacts the weight, and, of course, the high price.

A second type of absorbing element is that which is based on the union of two sheets, at least one of which is corrugated, so that the space that remains between the sheets serves as a channel, with the upper sheet being the one exposed to the radiation.

The union between both sheets can be done by welding, which can be a costly solution in time and difficult to apply on thin sheets; they can also be fastened with adhesive, although this system presents little resistance to the stress derived from the projected pressure of the fluid, worsening the thermal conductivity of the overall unit and making the process more expensive.

Furthermore, the previous operation of shaping at least one of the sheets also complicates the process.

There are documents corresponding to Patents of Inventions that try to optimise the contact between the surface exposed to the radiation and the heat-transfer fluid and, therefore, the thermal interchange, by means of the use of multiple extruded profiles that are comprised of channels and fins on which the radiation comes in contact, united to two collector channels through which the fluid enters and exits.

In this regard, the documents EP 00004126, GB 1429216 and GB 2156063 can be mentioned, in which an absorber is described whose profiles are joined to the collector tubes by means of intermediate tubular connection pieces.

In documents DE 4438396, GB 2385910 and WO 2006135942, an absorber is described in which the profiles are joined to collector tubes by means of a mechanised union, using screws.

In both cases, to be exact, in the documents referred to above, the addition of elements for the union of pieces makes the final product more expensive, complicating its assembly and leading to thermal losses, making the obtaining of the perfect water-tightness of the system difficult and sometimes requiring the use of coupling pieces.

In an attempt to resolve part of the abovementioned problems, that is, to obtain the contact between the edges of the fins integrated in the profiles, and to achieve, therefore, thermal continuity in the absorber, documents US 4111188, GB 2156063 and GB 2385910 use a bridle joint or clip that does not lead to a perfect contact between the profiles and, therefore, does not achieve thermal continuity in the absorber.

In addition, the assembly operation in these cases is laborious and difficult to automate.

Furthermore, document WO 02/103272a1 can be mentioned in which an absorber is described formed by a metallic extruded section, preferably aluminium, that joined to a adjoining section of the same geometry, forms a channel or hole, so that the face opposite this hole forms a flat surface which receive the solar radiation. In this case, in order to ensure the water-tightness of the formed hole, the insertion of copper pipes is considered that ensures the fastening of the extruded elements, with the copper expanding radially.

Therefore, the need to include a new material (copper) makes it lose efficiency due to the loss of heat by the contact between the aluminium and the copper, which also signifies a considerable increase in the weight of the absorber.

Finally, document ES 2134720A1 describes a solution for a complete solar collector based on extruded elements, preferably of aluminium, where the absorbing surface is materialised in one or more rectangular fins provided on one of the longitudinal edges of a deep groove that permits fitting into the opposite edge of the adjacent fin, so that this male-female coupling of the fins establishes a continual absorbing surface, in which the middle area contains a groove of a semicircular shape where the conductor tube of the heat-transfer fluid is fastened, serving the extruded coupling element as an auxiliary tube through which the heat-transfer fluid circulates.

Therefore, in this case, as in the previous one referred to, there is a loss of efficiency and an increase in the weight of the absorber.

### DESCRIPTION OF THE INVENTION

The absorber that is proposed has been conceived to resolve the problem explained above, based on a simple solution but one of great effectiveness.

More specifically, the absorber of the invention, made up of a certain number of extruded metal profiles, presents the special feature that each one of these profiles forms a central channel through which the heat-transfer fluid circulates, with the profile or central channel also being provided with two lateral fins, that is one on each side.

The extruded profiles commented above are placed parallel to each other and spaced, while their entry and exit are joined to some collectors that are preferably circular among which the extruded profiles are crosswise to these circular collectors, with the union between these elements being made by welding, with the absence of joints, without adhesives or mechanical elements, for which reason no additional fastening and waterproofing elements are required as needed by other systems.

In addition, between the lateral fins of the extruded profiles, intermediate flat metallic plates are welded to absorb the heat in the rest of the surface, for which reason the surface exposed to the radiation will be comprised by the extruded profiles with fins and the flat plates or sheets joined to them, placed in alternate form and welded together.

The absorber can lack the intermediate metallic plates and be formed only by the extruded profiles placed collaterally.

Optionally, the intermediate plates can be substituted by a metallic sheet that covers all or the majority of the exposed surface and is supported by the extruded profiles, and that is also welded to the ends of the fins of the profiles.

The sheet can have a selective coating, applied before or after the welding of the profiles. In this way, the exposed surface increases the absorbency of the solar radiation while maintaining low values of thermal emissivity.

Therefore, the configuration of the system permits optimising the number of extruded profiles according to the specific working conditions of the absorber and its working temperature.

In accordance with the characteristics referred to, in the extruded profile of the invention there are two welded unions in the ends of the fins, guaranteeing better conduction and, therefore, a lower temperature of the surface for the same number of channels, or else a lower number of channels for the same maximum temperature of the surface, contrary to what occurs traditionally where the profiles through which the fluid circulates are tubular and there is a single tangent line of union between the sheet and the tube.

It should be highlighted that the union between the flat plates or metallic sheet and the fins of the extruded profiles of the invention have a section such that it does not reduce the system's heat transmission, with a thickness equal to or greater than that of the plate itself, in order to offer minimum resistance to the local thermal conduction. Furthermore, due to the special geometry, the heat that arrives through the fins is incorporated to the fluid with less resistance by virtue of the fact there is no union as it is part of the same extruded profile, with the factor of the shape of the system improving the contact with the heat-transfer fluid, thus improving the perimeter - area, being able to reduce the losses by radiation by reducing the temperature of the surface and thus achieving a more efficient association.

The number of extruded profiles that the absorber incorporates can vary, so that the greater their number the less the width of the intermediate sheet or plates.

The fact should also be highlighted that the use of extruded profiles welded to the intermediate sheet or plates permits taking optimum advantage of the properties of each element.

The function of the channel of the extruded profile is the conduction of the fluid, and, therefore, its thickness must be greater to support the pressure and corrosion.

In turn, the fins of the extruded profile facilitate the transfer of heat to the tubular area where the fluid is, with the welding of the absorption plates or sheet to maintain the dimensional stability of the system, with its dimensions being sufficiently robust to support the welding without warping, and establishing a smooth transition with the channel and maintaining low weight.

The metallic plates or sheet welded between the extruded profiles also permit obtaining a lighter-weight solution while maintaining the features, due to the fact that thinner and very pure aluminium can be used, with greater conductivity than the alloys that are used for extrusion.

Moreover, the welded union between elements provides better yield and guarantee of duration than any other clipped, tongue-and-groove or mechanically joined solution.

The configuration of the system permits optimising the number of extruded profiles and the width of the intermediate plates, according to the specific working conditions of the absorber and its working temperature, with the special feature that as a minimum the system can be constituted only by the extruded profiles, covering the entire surface, and lacking, therefore, the intermediate plates, which will guarantee a surface temperature practically equal to the fluid temperature, although in this case the weight would be greater.

The union between the extruded profiles and the collectors is done, in each case, through a single hole made in the collectors, so that in order to guarantee the water-tightness the entire perimeter of the extruded profile is welded as well as on the surface of its collector, simplifying in this way the fabrication process of the absorber.

The control of the balance of the flow that circulates through each extruded profile is regulated by the diameter of the holes drilled in the collector tubes, being able to increase the drop in pressure in order to have a greater number of solar panels being placed parallel without reducing the yield of the intermediate panels.

The number of panels that can be placed parallel will depend on the ratio between the area of the collector tubes and the areas of the passing of the fluid along the channels, so that the higher the ratio the situation is more favourable for placing panels parallel to each other.

In the absorber of the invention this aspect can be controlled and improved by varying the diameter of the holes drilled in the collector tube - obstructed profile unions and by varying the number of extruded profiles, so that the use of a reduced number of channels is possible thanks to the fact that this will affect less the performance than in a traditional collector by working at a lower surface temperature.

All the materials of the absorber unit, made up of the extruded profile, collector tubes and absorbing intermediate metallic plates or sheet, will be preferably manufactured in aluminium or an aluminium alloy, of low cost, low density and high thermal conductivity, while the heat-transfer fluid used, as is usual, can be water or a mixture of water with antifreeze, although any other liquid or gas could be used.

The surface corresponding to the face exposed to the solar radiation of the absorber can be treated to increase the absorbency of the solar radiation, without this signifying an increase in the thermal emissivity, being able to treat it by means of selective paints, anodised surface treatments, treatments through chemical solutions, etc.

Also and for the same purpose, the roughness and porosity of the surface can be modified, considering the making of grooves or ribs on the surface exposed to the radiation, which could be obtained directly in the extrusion process.

Finally, it can be said that the internal section of the channels corresponding to the extruded profiles can be of any geometry, although in order to enhance the heat interchange between the fins and the heat-transfer fluid it is recommended to use a minimum section and to achieve a turbulent regime of the fluid in the interior, so that the surface of the channels in contact with the fluid can be shaped, and formed or divided by means of a partition in order to improve the heat interchange with the heat-transfer fluid, improving in all cases the perimeter-area ratio in order to improve the yield.

### DESCRIPTION OF THE DRAWINGS

In order to complement the description that is going to be made below and with the objective of helping to understand the characteristics of the invention, in accordance with a preferred practical realisation of it, a set of drawings are attached as an integral part of said description being represented as an example but not limited to the following:

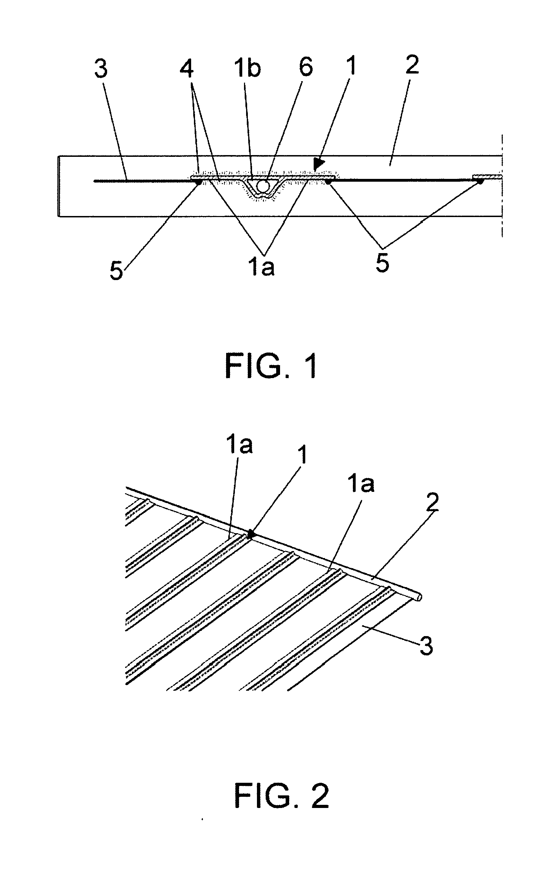

Figure 1. It shows a view corresponding to a close-up in cross section of the absorber made according to the objective of the invention.
Figure 2. It shows a partial view in perspective of the absorber, noting the complete assembly of all the pieces, from the lower face not exposed to the radiation.

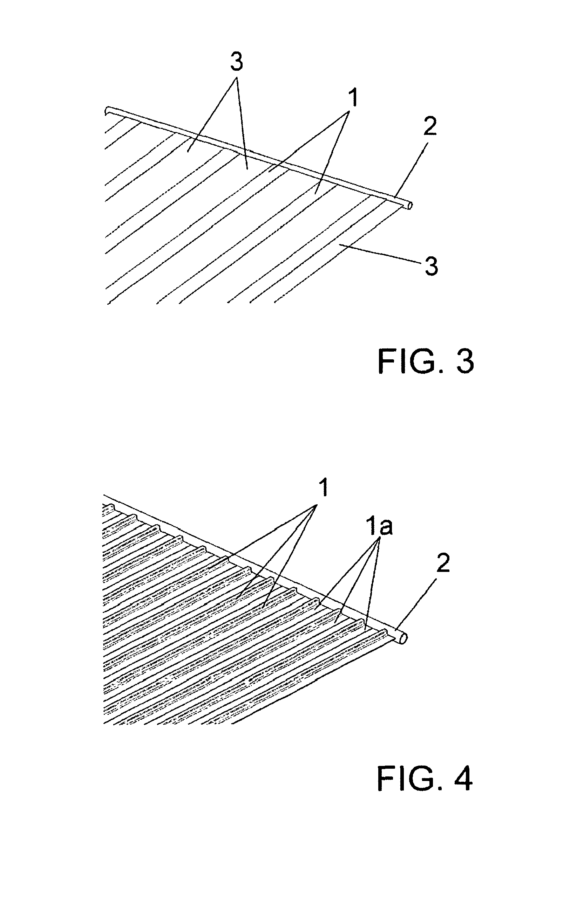

Figure 3. It shows a perspective absorber like the previous figure, in this case from the face exposed to the solar radiation.
Figure 4. It shows a partial view in perspective of the absorber realised in a second way, in which the entire surface of the absorber is determined by the extruded profiles, making the use of the metallic plates between said profiles unnecessary.
Figure 5. It shows a close-up in perspective of the absorber indicating the welding areas.
Figure 6. It shows sectional views corresponding to different variations of producing the extruded profile with different ribs or grooves on the surface exposed to radiation and different channel shapes, including up to multiple channels in the same profile.
Figure 7. It shows, finally, a sectional view of different sizes and shapes and forms of the holes drilled through which the heat-transfer fluid passes from the channels of the extruded profile to the collector tubes.
Figure 8. It shows a sectional view similar to that of Figure 1, but corresponding to a variation of practical realisation in which the extruded profiles are fixed to a common heat-absorbing sheet.
Figure 9. It shows a partial view in perspective of the absorber of the realization variation represented in Figure 8, noting the complete assembly of all the pieces, from the upper face, exposed to the radiation.
Figure 10. It shows a partial view in perspective of the absorber of the Figures 8 and 9, noting the complete assembly of all the pieces, from the lower face not exposed to the radiation.
Figure 11. It shows a sectional close-up of the absorber corresponding to a variation of practical realisation in which a conductor paste has been applied in the space defined between the two welded areas, the metallic sheet and the profile.

### PREFERRED REALISATION OF THE INVENTION

As can be seen in the figures referred to, the absorber of the invention is constituted by means of a plurality of extruded profiles (1) which acting a single piece make up a channel (1b) through which the heat-transfer fluid flows and the two lateral fins (1a), that is, on both sides of the channel (1b), preferably of greater thermal conductivity.

The extruded profiles (1) are placed crosswise to a pair of tubular collectors (2), placed parallel to each other and with holes (6) for the communication between the channels (1b) of the extruded profiles (1) and the collectors (2).

Furthermore, the fins (1a) of the extruded profiles (1) are joined to intermediate metallic plates (3), fastened by means of welding (5), with these plates (3) being of a lesser thickness than the profiles themselves
(1) and which can be comprised of a different alloy, preferably of greater thermal conductivity.

The union of the profiles (1) to the collectors (2) is also done by means of welding (4), making the union as complete as possible, coinciding the hollow section of the channel (1b) through which the heat-transfer fluid runs with the holes (6) drilled in the collector (2).

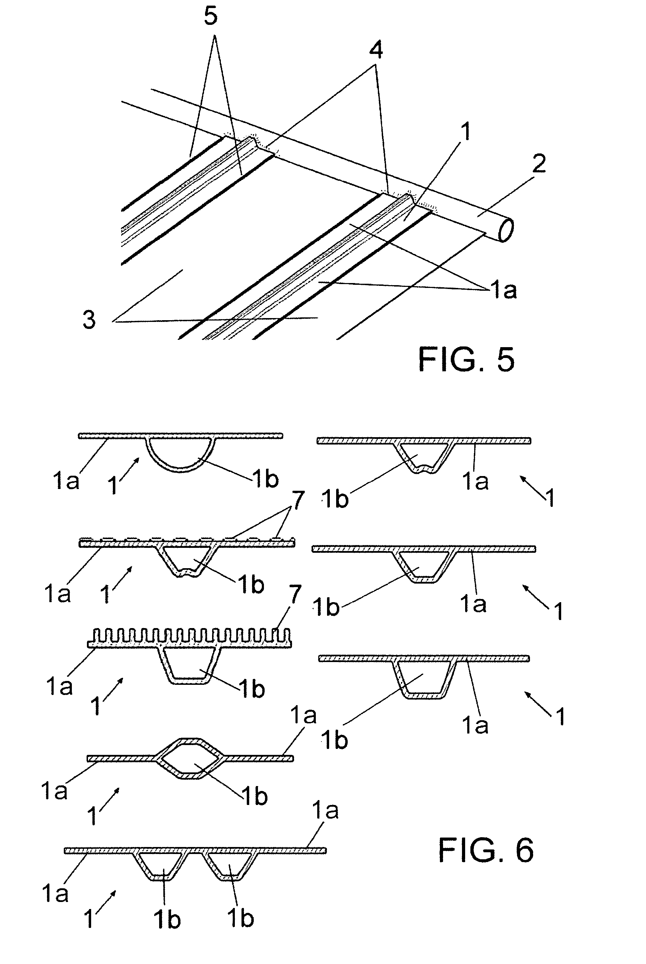

In Figure 6 different realisations of the extruded profiles (1) can be seen, where the channel (1b) established in each of them presents a different configuration, and even on the face exposed to the radiation ribs (7) or roughness can be seen, being able to see that the lower extruded profile (1) of this Figure 6 shows two channels (1b).

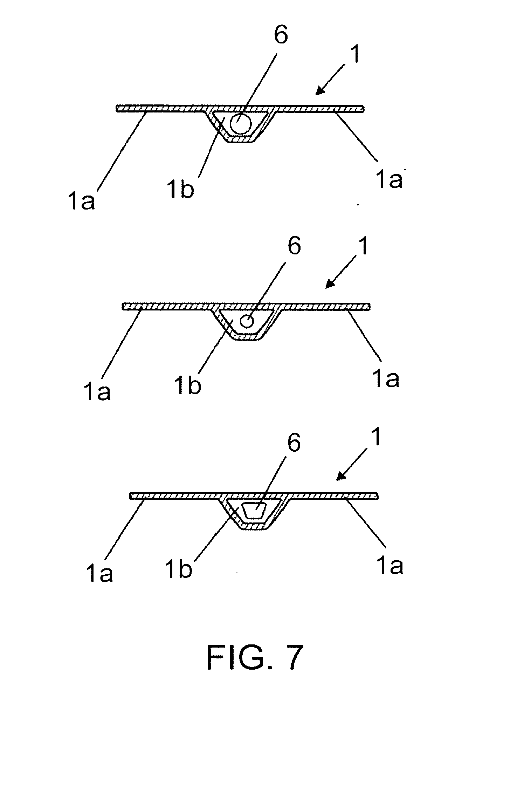

In Figure 7, three extruded profiles (1) are shown with their corresponding channel (1b) in each of them and the holes (6) of different configuration and size, that will be made in the respective collector (2) for the connection and communication among the channels (1b) that carry the extruded profiles through which the heat-transfer fluid circulates, with the tubes that make up the collectors (2).

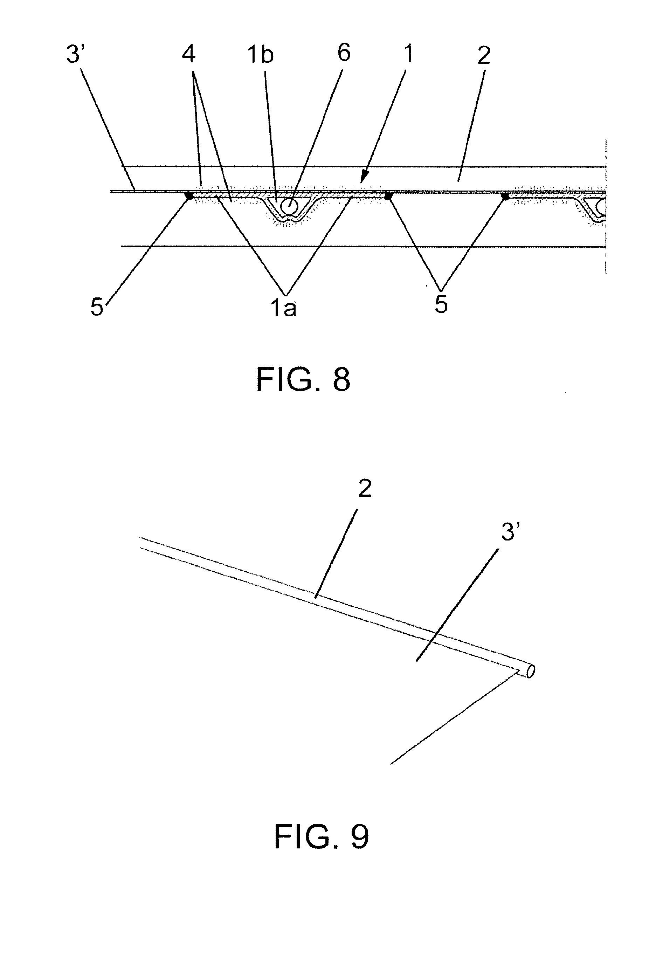

As can be seen in the close-up of Figure 8, optionally, and substituting the plates (3), the fins (1a) of the extruded profiles (1) are joined to a metallic sheet exposed to the radiation (3'), fastened by welding (5), with the sheet (3') being thinner than the profiles (1) and which can be comprised of a different alloy, preferably of greater thermal conductivity.

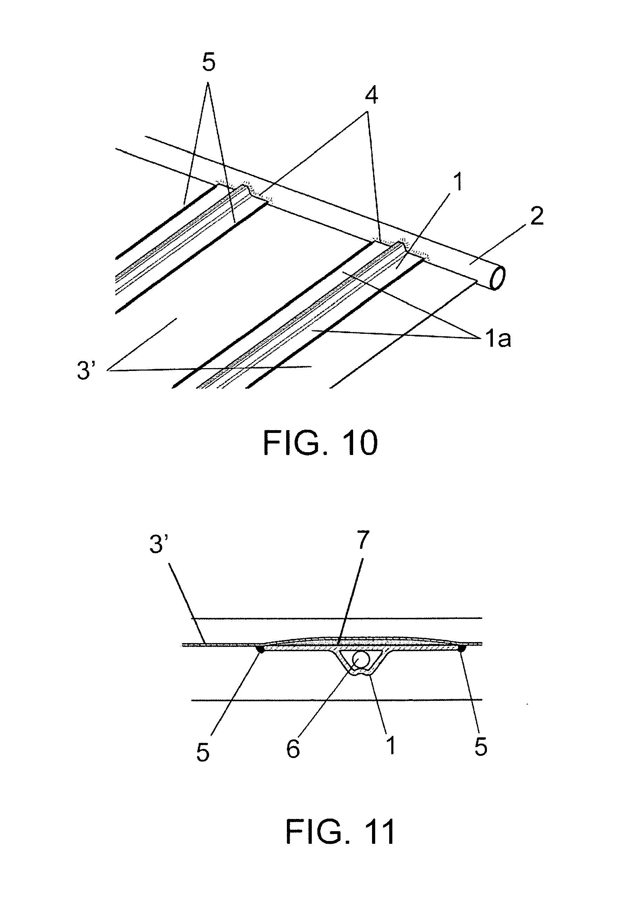

Finally, it should be pointed out that, in accordance with another variation of practical realisation of the invention, that shown in Figure 11, a conductive paste (7) can be applied in the space defined between the two welded areas (5), the metallic sheet (3') and the profile (1), which increases the thermal yield of the device.

## Claims

1. Absorber of extruded metal for solar collector, which, being used for the capturing of solar radiation for the subsequent thermal interchange with a heat-transfer fluid that runs through its interior, and made by means of extruded aluminium or aluminium alloy elements, **characterised** because each extruded element forms a channel for the circulation of the heat-transfer fluid, whose profile is directed towards both sides in its fins that jointly with the surrounding area of the channel established in the extruded profile is fastened by welding to two end and crosswise tubes as collector elements; with the special feature that between the free edges of the lateral fins of the adjoining extruded profiles metallic plates are welded creating a surface continuity in the entire absorber unit.

2. Absorber of extruded metal for solar collector, according to claim 1, **characterised** because the welding of the extruded profiles to the collector tubes is done completely, establishing the communication between both through the holes drilled previously in the collector tubes, without penetration in the extruded profiles on the collector tubes.

3. Absorber of extruded metal for solar collector, according to above claims, **characterised** because the holes made in the collector tubes for their communication with the channels of the extruded profiles determine a means of control of the flow that circulates through each extruded profile, by means of adjusting the perimeter or section of each of them in order to achieve the balance between the flows of all the extruded profiles.

4. Absorber of extruded metal for solar collector, according to above claims, **characterised** because the holes made in the collector tubes are adjustable in diameter or section with the channels of the extruded profiles, permitting control of the number of absorbers that can be placed parallel to each other, facilitating the equilibrium of the entire installation.

5. Absorber of extruded metal for solar collector, according to above claims, **characterised** because the extruded profiles are joined collaterally to each other through their fins, without the intermediate plates, determining that the total absorption surface is covered by the extruded profiles themselves.

6. Absorber of extruded metal for solar collector, according to above claims, **characterised** because the surface of the extruded profiles exposed to the solar radiation present roughness and/or porosity, or else ribbing, grooves or are textured for their improved performance.

7. Absorber of extruded metal for solar collector, according to above claims, **characterised** because the interior section of the channel established in each of the extruded profiles has partitions, ribs, dents or any other geometric configuration that favours the transfer of heat flow towards the fluid.

8. Absorber of extruded metal for solar collector, according to above claims, **characterised** because the extruded profiles are affected by two or more channels in order to increase the heat transfer.

9. Absorber of extruded metal for solar collector, according to above claims, **characterised** because the surface exposed to the solar radiation includes a selective coating.

10. Absorber of extruded metal for solar collector, according to claim 1, **characterised** because optionally, in substitution of the aforementioned plates, the free edges of the lateral fins of the extruded profiles are welded to a common absorption sheet of solar radiation.

11. Absorber of extruded metal for solar collector, according to claim 10, **characterised** because in the area confined between the two welding areas of the ends of the fins, in order to fasten the extruded profile to the metallic sheet exposed to the radiation, a heat-conductive paste is applied.

12. Absorber of extruded metal for solar collector, according to claim 10 and 11, **characterised** because the surface of the metallic sheet exposed to solar radiation includes a selective coating.

13. Absorber of extruded metal for solar collector, according to claim 10 and 12, **characterised** because the surface of the metallic sheet exposed to solar radiation presents a coating done prior to the welding of the extruded profiles.

14. Absorber of extruded metal for solar collector, according to claim 10 and 12, **characterised** because the surface of the metallic sheet exposed to solar radiation presents a coating done after the welding of the extruded profiles.
